# EUROPEAN PATENT SPECIFICATION

(11) **EP 0 806 142 B1**
(45) Date of publication and mention of the grant of the patent: **31.10.2001**
(21) Application number: 97660052.8
(22) Date of filing: 02.05.1997
(51) Int. Cl.: A21B 1/00, A21B 1/04, F24B 1/24

(54) **Baking oven**
Backofen
Four de cuisson

(30) Priority: 09.05.1996 FI 961990
(43) Date of publication of application: 12.11.1997
(73) Proprietor: Nunnanlahden Uuni Oy, 83940 Nunnanlahti (FI)
(72) Inventor: Lehikoinen, Juhani, 83940 Nunnanlahti (FI)
(74) Representative: Helino, Timo Kalervo

(56) References cited:
- EP-A- 0 265 914
- WO-A-92/08080
- FR-A- 2 288 466

## Description

The present invention relates to a bake oven as defined in the preamble of claim 1.

Typically, bake ovens are used for two purposes: cooking and heating. When wood is burned in the bake oven, heat is absorbed in the top, walls and fire bottom of the oven. In traditional bake oven constructions, the heat is transmitted from these parts, partially already during the heating stage, through an intermediate deck to the substructure and further via radiation and conduction to the outer casing. During cooking, heat is transferred to the food being baked via radiation from the top and side walls of the oven and via conduction and radiation from the fire bottom. The rest of the heat is transmitted at different rates, depending on the structure of the oven, to the outer casing and further into the surrounding space. Therefore, a bake oven like this is a compromise between baking and heating.

At the final phase of the heating of a bake oven, i.e. at the ember burning stage, the embers are burned out fairly completely on the fire bottom, and firebrands which have not yet been completely burned out are dropped through an ember dropping hole into a space below the fire bottom, where they are allowed to burn out.

In current bake oven constructions, such as EP-A-0 265 914, there is an intermediate deck placed on top of the side and back walls of the lower space - whether an ember burning space or a fireplace firebox - and forming the ceiling of this space. The intermediate deck supports the side and back walls of the bake oven, which in turn support the top of the bake oven. The fire bottom, i.e. the bottom stones of the bake oven are placed between the side wall stones of the interior structure of the bake oven, on the intermediate deck so that they can be easily replaced when necessary. The bottom stones can be laid directly onto the intermediate deck, but it is also possible to have a layer of sand between the intermediate deck and the bottom stones.

The sand under the bottom stones is meant to prevent the heat from being absorbed from the bottom stones into other parts of the oven structure. However, the sand may cause problems as it sinks in, and there have also been cases where the sand has gradually fallen down through gaps under the intermediate deck into the ember burning space, resulting in an uneven fire bottom. It is not possible to have sand insulation under the entire fire bottom because the ember dropping hole needed in the fire bottom area limits the use of sand in the entire fire bottom area. As insulating sand can only be used in a part of the fire bottom area, heat is transmitted in some areas of the fire bottom directly to the intermediate deck, resulting in large temperature differences between different parts of the fire bottom and naturally causing problems with baking.

The above-described phenomenon and uneven heat distribution also occur in structures in which there is no sand under the bottom stones but the fire bottom lies directly on the intermediate deck. Moreover, the air and flue gases circulating during the ember burning stage have a cooling effect on the ember burning space, i.e. the space under the fire bottom, and therefore also on the interior of the bake oven.

In existing bake oven solutions, heat is directly transmitted from the side wall stones of the bake oven to the intermediate deck and the structures in the lower part of the oven, causing cooling of the bake compartment of the bake oven and especially the areas at the edges of the bake compartment. Therefore, to achieve a good baking result, a longer heating time and consequently more fuel wood is required.

The object of the present invention is to produce a new type of bake oven construction which provides more uniform and more persistent good baking properties with a smaller amount of fuel wood and a shorter heating period. A further object of the invention is to give the bake oven properties that allow the bake oven to be optimally adjusted according to its use and the user's needs.

As for the features characteristic of the invention, reference is made to the claims.

The bake oven of the invention comprises an outer casing and within the outer casing heat storing soapstone structures comprising a fire bottom made of a bottom stone, walls and a top which form a baking space, from where an ember dropping duct leads down into a space below, such as an ember burning space or the firebox of a fireplace, having walls made of soapstone. According to the invention, the heat storing soapstone structures of the baking space and those of the space below it are separated from each other by a heat insulating layer consisting of a layer of material which forms a horizontal break in heat conduction in the entire soapstone structures within the outer casing of the bake oven.

The heat storing interior soapstone structures in the bake oven of the invention include a bottom stone forming the fire bottom, the walls and top of the baking space and the load-bearing wall structures of the space below the baking space. The heat insulation layer of the invention forms below the heat storing structures of the baking space, i.e. below the bottom stone, a horizontal material layer with a heat conductivity substantially lower than that of the materials used in the baking space structures. Therefore, the heat insulating layer need not consist of heat insulating materials known in themselves, but the essential point is that this insulating layer has a clearly lower heat conductivity than do the interior oven structures above and below it.

In an embodiment of the invention the heat storing structures of the space below comprises an intermediate deck made of soapstone, on which the heat insulating layer is placed.

In another embodiment of the invention, the intermediate deck below the bottom stone is formed by a self-supporting heat insulating layer, which may consist e.g. of a suitable sealing compound.

The bake oven construction of the invention has significant advantages as compared with prior art:
due to the use of a continuous insulating layer extending over the entire area of the intermediate deck, heat is transmitted more slowly to the substructures, with the result that a uniform heat distribution in the fire bottom already occurs during the heating stage and the baking space is heated more quickly than in prior-art solutions,
as the insulating layer effects a more uniform heat distribution in the bake oven bottom and the temperature differences in different parts of the baking bottom are smaller than in prior-art solutions, even an inexperienced user will achieve good baking results more easily,
temperature differences on the baking bottom are less dependent on the heating technique, in other words, a uniform temperature of the baking bottom is easily achieved regardless of the burning technique used, such as adjustment of draught during combustion or burning of embers,
the amount of fuel wood needed for baking is reduced because downward heat conduction is diminished and the oven is heated more quickly,
baking costs are reduced as less wood is needed for baking,
the interior of the bake oven cools down more slowly, so the same heating provides more baking time,
the properties of the bake oven can easily be changed according to use by changing the material of the insulating layer and by choosing materials having different heat conduction properties, so the oven can be made into a high-efficiency bake oven or a long-time heater with a mild surface temperature or a fast heater with a hotter surface temperature, and
burning of embers has no cooling effect on the interior of the bake oven because heat flow into the ember burning space has been blocked, which permits a longer ember burning time e.g. when too much wood has been burned and the oven tends to be overheated, the embers can be dropped down earlier and allowed to burn out in the ember burning space even with a large amount of air for fast burn-out without cooling down the bake oven.

The above advantages are particularly pronounced in soapstone bake ovens, which have good heat conduction and heat storing properties.

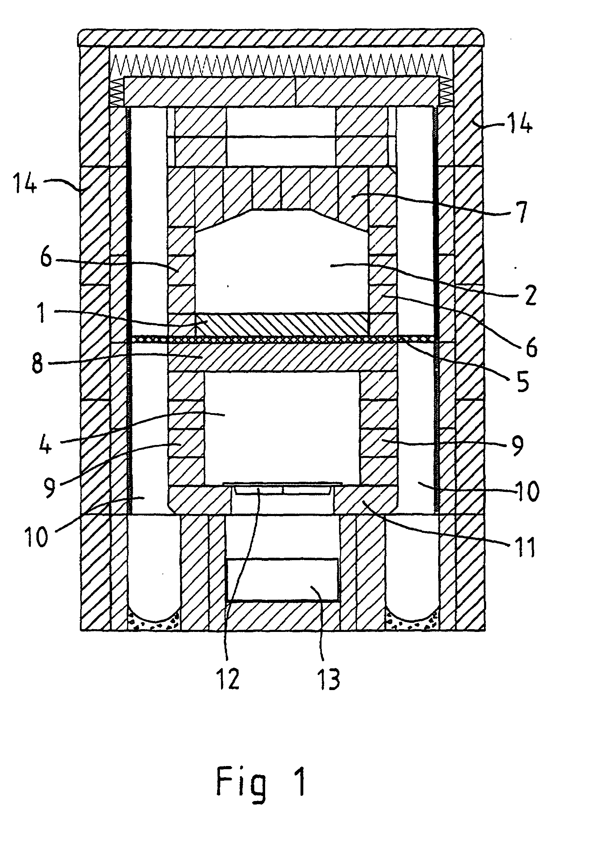

In the following, the invention is described in detail by referring to the attached drawings, in which
Fig. 1 presents a sectional front view of a bake oven as provided by the invention,

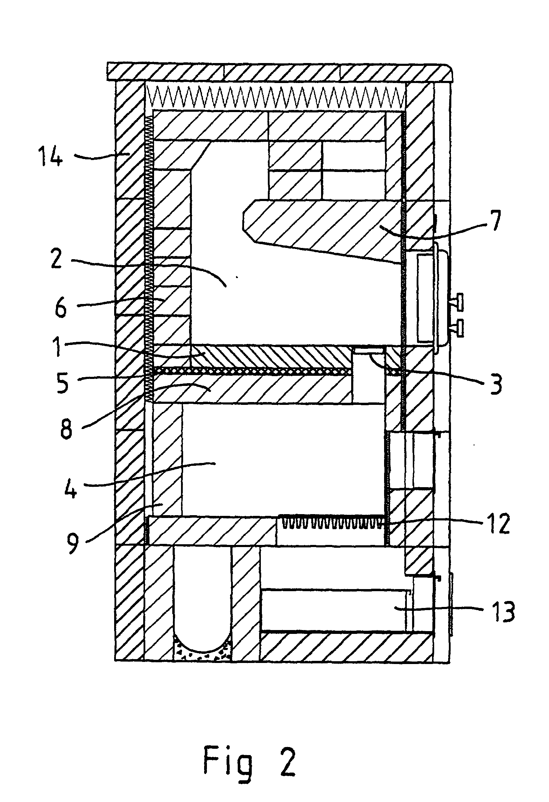

Fig. 2 presents a sectional side view of the bake oven in Fig. 1, and
Fig. 3 is a three-dimensional representation of the bake oven in Fig. 1, cut open along the plane of the insulating layer.

The bake oven illustrated by the figures comprises a baking space 2 provided with a bottom stone 1. In addition to the bottom stone, the baking space has walls 6 and a top 7 made of soapstone, a material capable of heat storage. The baking space opens upward in its rear part and turns on the sides into side channels 10 leading downward, through which the flue gases are passed from the lower end of the bake oven into a chimney flue.

From the front part of the baking space 2, an ember dropping duct 3 leads down through the fire bottom and the soapstone intermediate deck 8 under it into the space below. The intermediate deck is supported by the soapstone walls 9 of this lower space, which in this embodiment is an ember burning space. The walls 9 in turn are supported by the base structures 11 of the lower space, and these also comprise a grate 12 and an ash box 13.

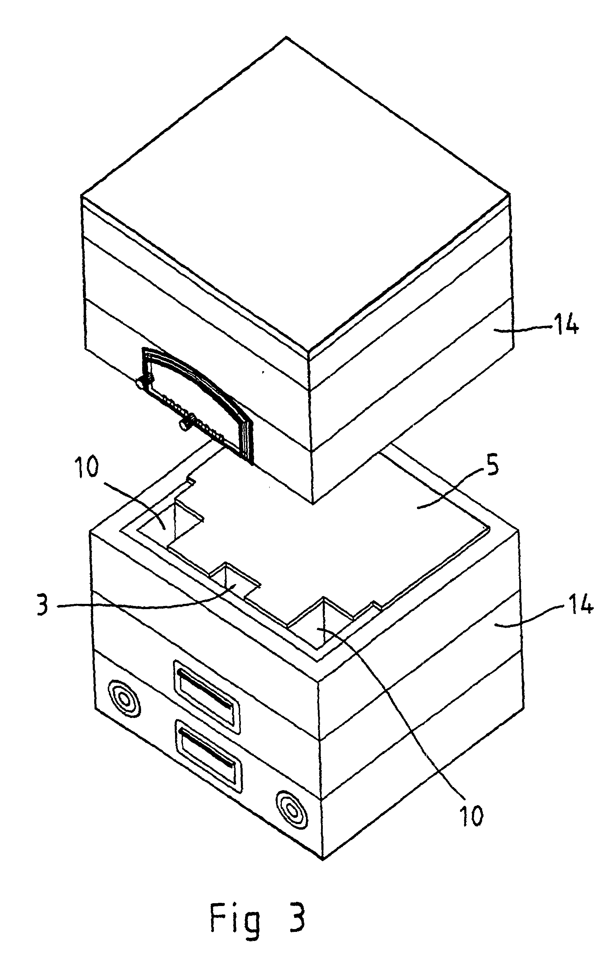

Placed on top of the intermediate deck 8 is a continuous heat insulating layer 5. The bottom stone 1 and the walls 6 of the baking space 2 are supported by the intermediate deck so that all heat storing soapstone structures inside the oven casing 14 are divided into two separate structures above and below the insulating layer 5, which do not have a contact between them that would allow direct and efficient heat transfer. In other words, no surface of the intermediate deck 8 is in direct contact with the bottom stone 1 or with the walls 6 of the baking space 2, and none of the wall structures 9 of the space 4 below the baking space are in direct contact with the heat storing structures of the baking space 2, but everywhere these structures are separated from each other by a continuous heat insulating layer as shown in Fig. 3, which effectively prevents vertical heat transfer between the interior structures of the bake oven.

The invention has been described above by the aid of an example and the attached drawings, but different embodiments of the invention are possible in different bake ovens and bake oven/fireplace combinations within the framework of the inventive idea defined by the claims.

## Claims

1. Bake oven comprising an outer casing (14) and within the outer casing heat storing soapstone structures comprising a fire bottom made of a bottom stone (1), walls(6) and a top (7) which form a baking space (2),from where an ember dropping duct (3) leads down into a space (4) below, such as an ember burning space or the firebox of a fireplace, having walls (9) made of soapstone, wherein the heat storing soapstone structures of the baking space (2) and those of the space (4) below it are separated from each other by a heat insulating layer, **characterized in that** said insulating layer (5) constitutes a horizontal break in heat conduction in the entire structures within the outer casing of the bake oven.

2. Bake oven as defined in claim 1, **characterized in that** the heat storing structures of the space (4) below comprises an intermediate deck (8) made of soapstone, on which the heat insulating layer (5) is placed.

3. Bake oven as defined in claim 1, **characterized in that** the heat insulating layer forms an intermediate deck under the fire bottom.

4. Bake oven as defined in any one of claims 1 - 3, **characterized in that** the heat insulating layer consists of material having a heat conductivity substantially lower than that of the heat storing soapstone structures (1, 6, 7, 8, 9).

## Patentansprüche

1. Backofen mit einem äußeren Gehäuse (14) und innerhalb des äußeren Gehäuses wärmespeichernden Specksteinstrukturen, welche einen Feuerboden aus einem Bodenstein (1), Wände (6) und eine Decke (7) aufweisen, die einen Backraum (2) bilden, von welchem ein Aschefallkanal (3) nach unten in einen darunterliegenden Raum (4) führt, wie einem Aschebrennraum oder eine Brennkammer eines Feuerraums, mit Wänden (9) aus Speckstein, worin die wärmespeichernden Specksteinstrukturen des Backraums (2) und solche des Raums (4) unter diesem durch eine wärmeisolierende Schicht (5) voneinander getrennt sind, **dadurch gekennzeichnet, daß** die isolierende Schicht (5) eine horizontale Unterbrechung der Wärmeleitung in den gesamten Strukturen innerhalb des äußeren Gehäuses des Backofens bildet.

2. Backofen nach Anspruch 1, **dadurch gekennzeichnet, daß** die Wärmespeicherstrukturen des unteren Raumes (4) ein aus Speckstein bestehendes Zwischendeck (8) aufweisen, auf welchem die wärmeisolierende Schicht (5) angeordnet ist.

3. Backofen nach Anspruch 1, **dadurch gekennzeichnet, daß** die wärmeisolierende Schicht ein Zwischendeck unter dem Feuerboden bildet.

4. Backofen nach einem der Ansprüche 1 bis 3, **dadurch gekennzeichnet, daß** die wärmeisolierende Schicht aus Material mit einer Wärmeleitfähigkeit, die wesentlich niedriger als die der wärmespeichernden Specksteinstrukturen (1, 6, 7, 8, 9) ist, besteht.

## Revendications

1. Four de cuisson comprenant une enveloppe extérieure (14) et, dans celle-ci, des structures en stéatite accumulatrices de chaleur comprenant un fond de chauffe fait d'une pierre de fond (1), des parois (6) et un plafond (7) qui forment une chambre de cuisson (2), d'où un conduit de chute des braises (3) descend dans une chambre inférieure (4), telle qu'une chambre de combustion des braises ou le foyer d'une cheminée, possédant des parois (9) en stéatite, four dans lequel les structures en stéatite accumulatrices de chaleur de la chambre de cuisson (2) et celles de la chambre inférieure (4) sont séparées l'une de l'autre par une couche thermiquement isolante, **caractérisé en ce que** la couche thermiquement isolante constitue une coupure horizontale en matière de conduction thermique dans la totalité des structures à l'intérieur de l'enveloppe extérieure du four de cuisson.

2. Four à cuisson selon la revendication 1, **caractérisé en ce que** les structures accumulatrices de chaleur de la chambre inférieure (4), comprennent un plateau intermédiaire (8) en stéatite, sur lequel est placé la couche thermiquement isolante (5).

3. Four de cuisson selon la revendication 1, **caractérisé en ce que** la couche thermiquement isolante forme un plateau intermédiaire sous le fond de chauffe.

4. Four de cuisson selon l'une quelconque des revendications 1 à 3, **caractérisé en ce que** la couche thermiquement isolante est constituée d'un matériau ayant une conductivité thermique sensiblement plus faible que celle des structures en stéatite accumulatrices de chaleur (1, 6, 7, 8, 9).
